# FASCICULE DE BREVET EUROPEEN

(11) **EP 1 778 540 B1**
(45) Date de publication et mention de la délivrance du brevet: **04.11.2015**
(21) Numéro de dépôt: 05791092.9
(22) Date de dépôt: 18.07.2005
(51) Int. Cl.: B64D 1/00

(54) **AMENAGEMENT DE LA PARTIE SUPERIEURE DE LA CABINE D'UN AERONEF**
ANORDNUNG DES OBEREN TEILS EINER FLUGZEUGKABINE
ARRANGEMENT OF THE UPPER PART OF AN AIRCRAFT CABIN

(30) Priorité: 26.07.2004 FR 0408239; 02.09.2004 US 606522 P
(43) Date de publication de la demande: 02.05.2007
(73) Titulaire: Airbus, 31700 Blagnac Cédex (FR)
(72) Inventeur: SAINT-JALMES, Bruno, F- 31400 Toulouse (FR); REZAG, André, F-31200 Toulouse (FR); ZANEBONI, Jazon, F-31000 Toulouse (FR)
(74) Mandataire: Santarelli
(86) Numéro de dépôt international: PCT/FR2005/001824
(87) Numéro de publication internationale: WO 2006/021646

(56) Documents cités:
- EP-A- 0 514 650
- EP-A- 0 901 964
- EP-A- 1 279 592
- US-A- 4 066 227
- US-A- 4 071 210
- US-A1- 2002 033 432
- US-A1- 2003 029 967
- US-B1- 6 536 710

## Description

La présente invention concerne un aménagement de la partie supérieure de la cabine d'un aéronef.

Le domaine technique de l'invention est le transport de passagers dans un aéronef. Dans un volume donné, la cabine d'un aéronef, il convient de disposer autant de passagers que possible en leur offrant un confort maximal. Habituellement, trois classes de confort sont proposées : première classe, classe affaire et classe économique. En première classe et en classe affaire les sièges proposés aux voyageurs sont le plus souvent des sièges convertibles qui proposent dans une première position une place assise au passager et dans une autre position une place couchée, plus ou moins inclinée en classe affaire. Diverses solutions sont connues de l'art antérieur pour proposer également des places couchées aux voyageurs de classe économique. Il a par exemple été proposé d'utiliser plusieurs sièges pour les transformer en lits superposés. Généralement le nombre de couchettes obtenu est inférieur au nombre de places assises. Dans les solutions connues, on compte en général deux places assises pour une couchette.

L'idée à l'origine de la présente invention est d'utiliser l'espace supérieur de la cabine de l'aéronef pour y disposer des couchettes. Le problème est de pouvoir disposer un grand nombre de couchettes.

Des documents de l'art antérieur ont déjà proposé d'utiliser l'espace supérieur de la cabine d'un aéronef. Ainsi, le document EP-0 901 964, qui montre les caracteristiques du préambule de la revendicaton 1, propose de disposer dans cet espace supérieur des couchettes desservies par un couloir. Comme on le remarque sur les figures de ce document, le nombre de couchettes est très limité. L'utilisation de ces couchettes est de ce fait plutôt réservée au personnel navigant. Un autre document, plus récent, le document US-6,619,589 propose lui aussi une configuration similaire.

La présente invention, telle que définie par la revendication 1, a alors pour but de fournir un nombre emportant de couchettes dans l'espace supérieur de la cabine d'un aéronef.

A cet effet, elle propose une cabine d'aéronef destiné au transport de passagers comportant :
- une structure principale correspondant à la structure de l'aéronef et enveloppant la cabine,
- un pont formant une surface plane sur laquelle sont fixés des sièges,
- une allée s'étendant longitudinalement dans la cabine et surélevée par rapport au pont, et
- des couchettes desservies par ladite allée et disposées au-dessus de sièges du pont.

Selon la présente invention, les couchettes desservies par l'allée surélevée sont disposées transversalement par rapport à l'allée et des deux côtés de celle-ci.

Grâce à cette configuration, il est possible de placer un plus grand nombre de couchettes dans la partie supérieure de la cabine en comparaison avec les aménagements de couchettes comparables de l'art antérieur.

L'invention propose aussi une forme de réalisation préférée dans laquelle les couchettes sont suspendues du côté de l'allée centrale à la structure principale de la cabine et sont reliées du côté opposé à l'allée à cette même structure. Les éléments supportant alors les couchettes peuvent présenter à la fois une structure légère et aussi être résistants car ils sont rattachés à la structure principale de la cabine. Dans cette forme de réalisation, on peut prévoir par exemple que les couchettes sont supportées par des éléments de structure en L, une première branche du L s'étendant sensiblement parallèlement au pont et présentant une longueur sensiblement égale à la longueur d'une couchette tandis que l'autre branche du L s'étend sensiblement perpendiculairement à la première branche, et les extrémités libres des éléments de structure en L sont fixées sur la structure principale de la cabine.

Pour ne pas augmenter inutilement la charge suspendue à la partie supérieure de la structure principale de l'aéronef, l'allée surélevée est avantageusement supportée par le pont de la cabine. Il ne s'agit pas là d'une surcharge importante pour le pont de la cabine. En effet, l'allée surélevée vient peut-être remplacer une colonne de sièges et le poids des éléments permettant de réaliser une allée surélevée ne devrait pas être supérieur au poids d'une colonne de sièges, même s'il s'agit de sièges de classe économique.

On peut prévoir qu'un escalier permet d'accéder à chacune des extrémités de l'allée surélevée. Cet escalier peut être orienté longitudinalement dans la cabine, ou bien transversalement. Dans le cas d'un escalier transversal, celui-ci peut être double (accès alors à l'allée par la gauche et par la droite). On peut aussi imaginer un escalier courbe. Une échelle pourrait également permettre l'accès à l'allée. Toutefois, cette solution bien qu'envisageable et meilleur marché qu'un escalier, n'est a priori pas la solution préférée car elle ne permet pas une évacuation rapide des passagers hors des couchettes desservies par l'allée surélevée.

Dans une forme de réalisation, l'allée surélevée divise longitudinalement la cabine en deux sections longitudinales. On trouve alors dans un tel aéronef un "mur" séparant longitudinalement la cabine en deux. Ceci permet d'avoir une allée avec une hauteur relativement importante permettant aux passagers accédant aux couchettes de marcher debout sans avoir à se pencher. Dans cette configuration avec deux sections longitudinales et lorsque la cabine présente par exemple des sièges convertibles en couchettes et des sièges non convertibles en couchettes, les sièges convertibles en couchettes se trouvent par exemple tous dans une même section longitudinale.

Afin de libérer un maximum d'espace pour les passagers prenant place sur les couchettes, des passages pour des conduits d'air et des canalisations sont avantageusement prévus dans une structure supportant le pont.

Dans une variante de réalisation préférée, des espaces de rangement sont disposés sous l'allée surélevée. Ceci permet d'avoir des coffres à bagages très accessibles. En outre un coffre à bagages posé sur le sol est d'un poids moindre qu'un coffre classique disposé en hauteur. Comme il y a beaucoup de place sous l'allée surélevée, cette place peut aussi être utilisée pour ranger des chariots (ou trolleys) utilisés par le personnel navigant pour réaliser le service aux passagers. Il peut également accueillir des éléments fixés au sol, appelés monuments. Il peut par exemple s'agir de cuisines utilisées pour le service en cabine (appelées généralement "galleys") ou aussi de penderies pour recevoir les vestes et manteaux des passagers (ces penderies sont généralement désignées par le terme anglais de "coat stowage").

Pour dégager un maximum d'espace pour les passagers tant au niveau des sièges que des couchettes, dans les zones où les couchettes se trouvent au-dessus de sièges, le plafond du pont est de préférence sensiblement parallèle au pont.

Des détails et avantages de la présente invention ressortiront mieux de la description qui suit, faite en référence au dessin schématique annexé, sur lequel :
La figure 1 est une vue de dessus d'une cabine d'un avion équipé d'un aménagement selon l'invention, et
Les figures 2 à 4 sont des vues correspondant à des sections transversales de l'avion de la figure 1 dans diverses configurations.

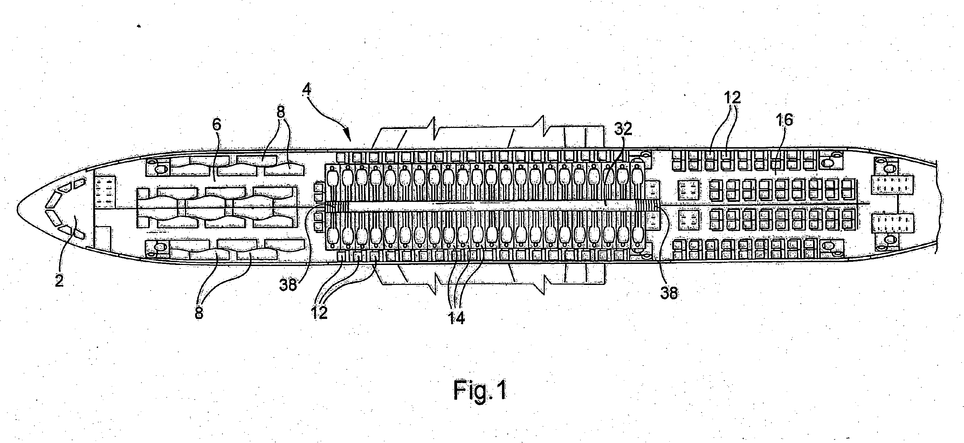

Sur la figure 1, on reconnaît un avion comportant un cockpit 2 dispose à l'avant de l'avion et une cabine 4 s'étendant sur la majeure partie de cet avion.

A l'avant de la cabine 4, se trouve un premier compartiment 6 dans lequel sont disposés des modules individuels pour passager 8. Dans chaque module individuel pour passager 8 se trouve un siège convertible pouvant recevoir un passager aussi bien en position assise que couchée. D'autres équipements de confort sont également prévus dans ce module. Le compartiment 6 est donc appelé ici compartiment de première classe.

Derrière le premier compartiment 6, se trouve un second compartiment 10, qui comporte d'une part des sièges 12 (non convertibles en lit) et d'autre part des couchettes 14. Les sièges 12 et les couchettes 14 sont disposés à des niveaux distincts. Ainsi, les couchettes 14 se trouvent au-dessus de sièges 12, tous les sièges 12 étant à un même niveau, correspondant au niveau auxquels se trouvent les modules individuels pour passager 8. Ce second compartiment 10 est décrit plus en détail ci-après.

Enfin, à l'arrière de la cabine 4, se trouve un troisième compartiment 16 dans lequel sont disposés des sièges 12 similaires aux sièges du second compartiment 10. Ces sièges 12 sont disposés à un même niveau que les sièges 12 du second compartiment 10 et que les modules individuels pour passager 8 du premier compartiment 6,

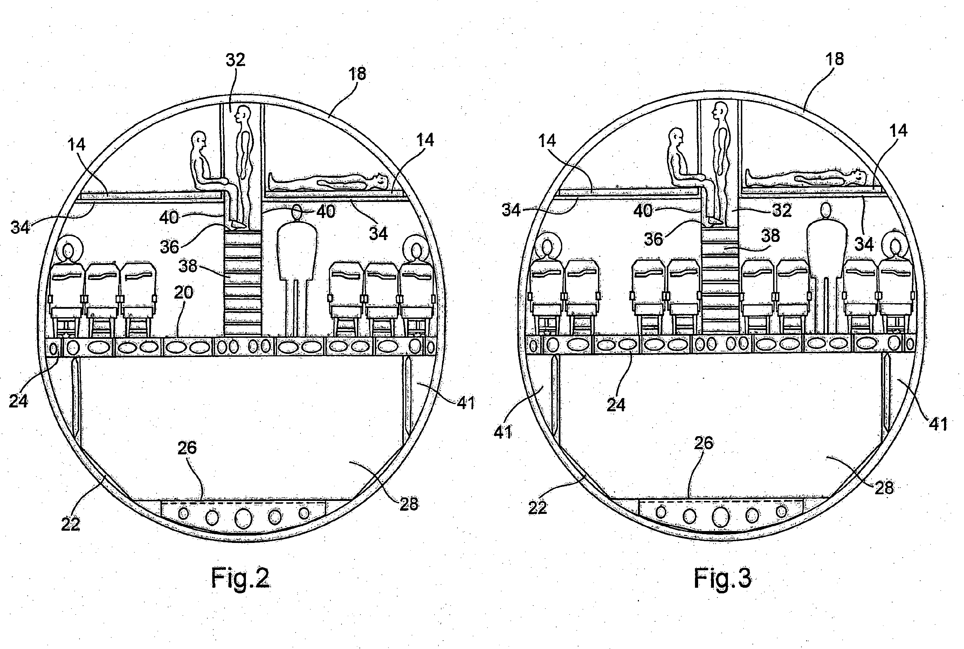

La figure 2 correspond à une vue en coupe du fuselage de l'avion de la figure 1, la coupe étant réalisée au niveau du second compartiment 10.

Sur les figures 2 à 4, une structure principale 18 de l'avion est schématisée à la périphérie de la cabine par un double trait. Il peut s'agir là d'une structure d'avion classique telle qu'elle est connue de l'homme du métier. De manière classique, un pont 20 s'étendant longitudinalement par rapport à l'avion sépare la cabine 4 d'une soute 22. Le pont 20 est supporté par une structure 24 formée notamment de poutres fixées sur la structure principale 18. La soute 22 présente un plancher 26 est est destinée à recevoir, dans sa partie au niveau du plan de coupe, des conteneurs 28 normalisés.

On suppose dans la suite de la description que le pont 20 est horizontal et s'étend dans un même plan sur toute la longueur et la largeur de l'avion. On suppose également que la cabine se trouve au-dessus du pont tandis que la soute se trouve en dessous de celui-ci.

Dans la partie supérieure de la cabine 4, et plus précisément du second compartiment 10, se trouvent les couchettes 14. Ces dernières sont disposées horizontalement c'est-à-dire parallèlement au pont 20 et sont orientées transversalement par rapport à la cabine. Comme on le voit notamment sur la figure 1, on a ici deux rangées de couchettes 14. Ces deux rangées sont disposées de part et d'autre d'une allée 32 centrale.

Les couchettes 14 sont supportées par des éléments porteurs 34 en forme de L. Ces éléments porteurs 34 sont disposés de telle sorte qu'une branche du L s'étende horizontalement et que l'autre branche s'étende verticalement vers le haut de la cabine 4. Les extrémités libres des branches du L sont chacune rattachées à la structure principale 18 de la cabine. On réalise ainsi deux mezzanines s'étendant longitudinalement des deux côtés de l'avion. L'allée 32 permet d'accéder à ces mezzanines. Elle présente un sol 36 comparable à une passerelle fixée sur le pont 20. On réalise ainsi un chemin surélevé par rapport au pont 20, au centre de la cabine 4. L'accès à ce chemin se fait par l'intermédiaire de deux escaliers 38, un escalier à chaque extrémité de l'allée 32. Une paroi latérale 40 relie de part et d'autre de l'allée 32 le sol 36 dé cette-ci aux couchettes 14. L'allée 32 est ainsi isolée du reste du second compartiment 10.

Le sol 36 repose de préférence sur des casiers de rangement. Ces derniers peuvent servir à accueillir les bagages des passagers du second compartiment 10. Il y a sous le sol 36 assez de place pour loger tous les bagages des passagers voyageant dans le second compartiment si l'on tient compte de la taille maximale admissible des bagages autorisés habituellement à voyager en cabine. Il y a même assez de place pour loger encore sous le sol 36 des chariots (galleys) habituellement utilisés par le personnel navigant commercial pour réaliser le service à bord de l'avion. La présence de cet espace de rangement permet de supprimer dans la cabine les casiers à bagages que l'on trouve généralement en hauteur. De la sorte, dans la partie haute de la cabine, plus de place est disponible et cette place est mise à profit pour le confort des voyageurs dans les couchettes 14.

Pour libérer encore plus d'espace dans le haut de la cabine 4, la structure 24 portant le pont 20 est organisée de manière à permettre le passage de diverses canalisations et conduites. On fait ainsi passer sous le pont 20, dans la structure 24, par exemple des faisceaux électriques, des canalisations hydrauliques et des canalisations pneumatiques. Des conduites d'âir pour la ventilation de la cabine peuvent quant à elles prendre place dans les soutes 22, juste sous la structure 24 portant le pont 20 et à proximité de la paroi extérieure de l'avion. L'emplacement recevant ces conduites d'air est repéré à l'aide de la référence 41. Ces conduites passent alors entre des bielles de structure et la peau de l'avion. Pour la ventilation de la partie supérieure de la cabine 4, des conduites peuvent être prévues le long d'éléments de structure transversaux appelés cadres pour alimenter en air cette partie de la cabine 4.

La figure 3 montre une variante de réalisation de la figure 2. Ici la différence est qu'il y a trois sièges de front de chaque côté de l'allée 32 centrale au niveau du pont 20 alors que, comme on peut le voir sur le dessin, il y en a quatre dans la configuration de la figure 2.

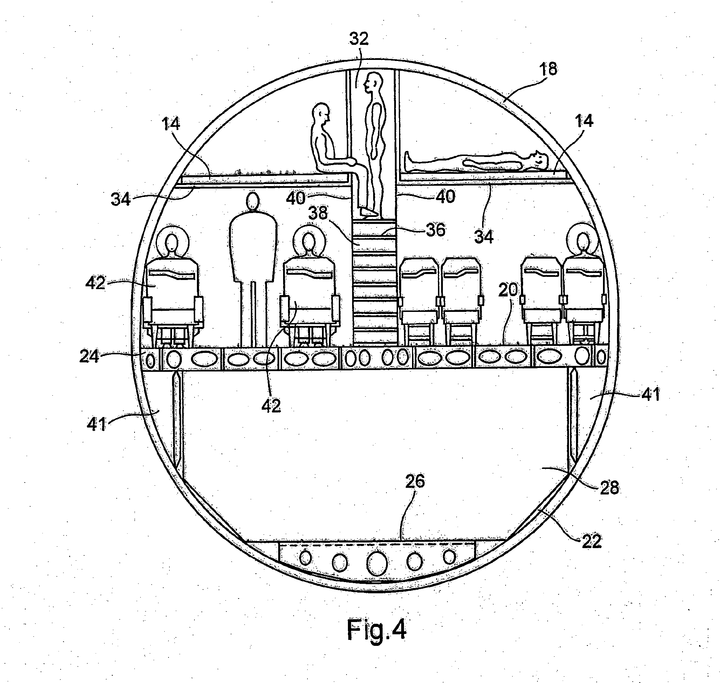

La configuration représentée sur la figure 4 est originale en ce que des sièges convertibles 42 sont disposés d'un côté de l'allée 32 centrale tandis que de l'autre côté de cette allée centrale on retrouve des sièges 12 correspondant aux sièges que l'on a habituellement dans les compartiments de classe économique. Généralement, dans un avion présentant un pont unique, les sièges correspondant à la classe économique sont disposés au fond de la cabine tandis que les premières classes et classes affaires sont disposées vers l'avant de la cabine. Ici, les passagers de première classe et de classe affaire sont placés sur la droite de l'avion, par rapport au sens de la marche de l'avion (c'est-à-dire à gauche sur la figure 4) et les passagers de classe économique à gauche de l'avion. Ainsi, lors de l'embarquement, les passagers de classe économique ne traversent plus les compartiments de première classe et de classe affaire et sont dirigés directement vers le compartiment de classe économique.

La solution proposée ci-dessus pour disposer des couchettes dans un aéronef permet pour la première fois de proposer à un grand nombre de passagers de classe économique de voyager couchés. Il y a certes moins de couchettes que de places assises proposées en classe économique mais on peut par exemple envisager d'avoir deux niveaux différents de tarification en classe économique : avec ou sans couchette.

La solution proposée pour réaliser des couchettes ne cause pas un surpoids important pour l'avion. En effet, comme il a été indiqué plus haut, la solution proposée conduit à la suppression de tous les coffres à bagages placés en hauteur. Ces coffres présentent une masse relativement importante. Un gain de poids très sensible est réalisé en remplaçant ces coffres à bagages disposés habituellement en hauteur par des casiers posés sur le pont et servant de support au sol 36 de l'allée 32 centrale.

La solution proposée permet d'avoir une allée 32 dans laquelle les passagers peuvent se déplacer sans être obligés de se courber. Il est ainsi possible de réaliser l'évacuation de l'aéronef dans le laps de temps prescript par les normes aéronautiques.

Le fait de supprimer les coffres à bagages disposés habituellement en hauteur permet également de libérer de la place dans le haut de la cabine. Les couchettes 14 peuvent ainsi être disposées à une distance du pont à peine supérieure à la hauteur d'un homme. Le niveau de ces couchettes peut donc être sensiblement abaissé par rapport aux couchettes de l'art antérieur qui se trouvent dans la partie supérieure de la cabine d'un aéronef. Cet abaissement du niveau des couchettes permet notamment de bénéficier d'une plus grande largeur au niveau des couchettes et autorise d'avoir dans la partie haute de la cabine, sur un même niveau, deux personnes allongées transversalement au sens de la marche de l'aéronef ainsi qu'une allée centrale.

La présente invention ne se limite pas aux formes de réalisation décrites ci-dessus à titre d'exemples non limitatifs. Elle concerne également toutes les variantes de réalisation à la portée de l'homme du métier, dans le cadre des revendications ci-après.

## Revendications

1. Cabine (4) d'aéronef destiné au transport de passagers comportant :
- une structure principale (18) correspondant à la structure de l'aéronef et enveloppant la cabine (4),
- un pont (20) formant une surface plane sur laquelle sont fixés des sièges (12, 42),
- une allée (32) s'étendant longitudinalement dans la cabine (4) et surélevée par rapport au pont (20), et
- des couchettes (14) desservies par ladite allée (32) et disposées au-dessus de sièges (12, 42) du pont (20),
**caractérisée en ce que**
- ladite allée longitudinale (32) est une allée centrale,
- les couchettes (14) desservies par l'allée (32) surélevée sont disposées transversalement par rapport à l'allée (32) et des deux côtés de celle-ci, et
- les couchettes (14) sont suspendues du côté de l'allée (32) centrale à la structure principale (18) de la cabine (4) et sont reliées du côté opposé à l'allée à cette même structure (18).

2. Cabine (4) d'aéronef selon la revendication 1, **caractérisée en ce que** les couchettes (14) sont supportées par des éléments de structure (34) en L, une première branche du L s'étendant sensiblement parallèlement au pont (20) et présentant une longueur sensiblement égale à la longueur d'une couchette (14) tandis que l'autre branche du L s'étend sensiblement perpendiculairement à la première branche, et **en ce que** les extrémités libres des éléments de structure (34) en L sont fixées sur la structure principale (18) de la cabine (4).

3. Cabine (4) d'aéronef selon l'une des revendications 1 et 2, **caractérisée en ce que** l'allée (32) surélevée est supportée par le pont (20) de la cabine.

4. Cabine (4) d'aéronef selon l'une des revendications 1 à 3, **caractérisée en ce qu'**un escalier (38) permet d'accéder à chacune des extrémités de l'allée (32) surélevée.

5. Cabine (4) d'aéronef selon l'une des revendications 1 à 4, **caractérisée en ce que** l'allée (32) surélevée divise longitudinalement la cabine (4) en deux sections longitudinales.

6. Cabine (4) d'aéronef selon la revendication 5, **caractérisée en ce que** la cabine (4) présente des sièges (42) convertibles en couchettes et des sièges (12) non convertibles en couchettes, et **en ce que** les sièges (42) convertibles en couchettes se trouvent tous dans une même section longitudinale.

7. Cabine (4) d'aéronef selon l'une des revendications 1 à 6, **caractérisée en ce que** des passages pour des conduits d'air et des canalisations sont prévus dans une structure (24) supportant le pont (20).

8. Cabine (4) d'aéronef selon l'une des revendications 1 à 7, **caractérisée en ce que** des espaces de rangement sont disposés sous l'allée (32) surélevée.

9. Cabine (4) d'aéronef selon l'une des revendications 1 à 8, **caractérisée en ce que** dans les zones où les couchettes (14) se trouvent au-dessus de sièges (12, 42), le plafond du pont est sensiblement parallèle au pont (20).

## Patentansprüche

1. Flugzeugkabine (4), die für die Beförderung von Passagieren bestimmt ist, umfassend:
- eine Hauptstruktur (18), die der Struktur des Flugzeugs entspricht und die Kabine (4) umgibt,
- eine Brücke (20), die eine ebene Fläche bildet, auf der Sitze (12, 42) befestigt sind,
- einen Gang (32), der sich längs in der Kabine (4) erstreckt und in Bezug zur Brücke (20) erhöht ist, und
- Kojen (14), die vom Gang (32) aus zugänglich sind und über Sitzen (12, 42) der Brücke (20) angeordnet sind,
**dadurch gekennzeichnet, dass**
- der Längsgang (32) ein Mittelgang ist,
- die Kojen (14), die vom erhöhten Gang (32) aus zugänglich sind, quer zum Gang (32) und auf beiden Seiten desselben angeordnet sind, und
- die Kojen (14) auf der Seite des Mittelgangs (32) an der Hauptstruktur (18) der Kabine (4) aufgehängt und auf der dem Gang gegenüberliegenden Seite mit derselben Struktur (18) verbunden sind.

2. Flugzeugkabine (4) nach Anspruch 1, **dadurch gekennzeichnet, dass** die Kojen (14) von L-förmigen Strukturelementen (34) getragen werden, wobei sich ein erster Schenkel des L im Wesentlichen parallel zur Brücke (20) erstreckt und eine Länge im Wesentlichen gleich der Länge einer Koje (14) aufweist, während sich der andere Schenkel des L im Wesentlichen senkrecht auf den ersten Schenkel erstreckt, und dass die freien Enden der L-förmigen Strukturelemente (34) an der Hauptstruktur (18) der Kabine (4) befestigt sind.

3. Flugzeugkabine (4) nach einem der Ansprüche 1 und 2, **dadurch gekennzeichnet, dass** der erhöhte Gang (32) von der Brücke (20) der Kabine getragen wird.

4. Flugzeugkabine (4) nach einem der Ansprüche 1 bis 3, **dadurch gekennzeichnet, dass** es eine Treppe (38) ermöglicht, Zugang zu jedem der Enden des erhöhten Gangs (32) zu erhalten.

5. Flugzeugkabine (4) nach einem der Ansprüche 1 bis 4, **dadurch gekennzeichnet, dass** der erhöhte Gang (32) die Kabine (4) längs in zwei Längsabschnitte teilt.

6. Flugzeugkabine (4) nach Anspruch 5, **dadurch gekennzeichnet, dass** die Kabine (4) zu Kojen verwandelbare Sitze (42) und nicht zu Kojen verwandelbare Sitze (12) aufweist, und dass die zu Kojen verwandelbaren Sitze (42) alle in einem selben Längsabschnitt angeordnet sind.

7. Flugzeugkabine (4) nach einem der Ansprüche 1 bis 6, **dadurch gekennzeichnet, dass** Durchgänge für Luftleitungen und Kanalisationen in einer Struktur (24), die die Brücke (20) trägt, vorgesehen sind.

8. Flugzeugkabine (4) nach einem der Ansprüche 1 bis 7, **dadurch gekennzeichnet, dass** Stauräume unter dem erhöhten Gang (32) angeordnet sind.

9. Flugzeugkabine (4) nach einem der Ansprüche 1 bis 8, **dadurch gekennzeichnet, dass** in den Zonen, in denen sich die Kojen (14) über Sitzen (12, 42) befinden, die Decke der Brücke im Wesentlichen parallel zur Brücke (20) ist.

## Claims

1. Airplane cabin (4) used for transporting passengers comprising:
- a main structure (18) being the structure of the aircraft and enclosing the cabin (4),
- a bridge (20) forming a flat surface on which the seats (12, 42) are secured;
- an aisle (32) extending longitudinally in the cabin (4) and raised with respect to the bridge (20), and
- beds (14) accessed by said aisle (32) and arranged above seats (12,42) of the bridge (20), **characterized by** the fact that
- said longitudinal aisle (32) is a central circle,
- the beds (14) accessed by the raised aisle (32) are arranged transversely with respect to the aisle (32) and the two sides of such aisle, and
- the beds (14) are suspended on the side of the central aisle (32) to the principal structure (18) of the cabin (4) and are attached on the other side of the aisle to this same structure (18).

2. Aircraft cabin (4) according to claim 1, **characterised by** the fact that the beds (14) are supported by L-shaped structural components (34), with one leg of the L extending considerably with the parallel bridge (20) and presenting a length that is considerably equal to the length of a bed (14) while the other leg of the L extends considerably perpendicularly to the first leg, and by the fact that the free ends of the L-shaped structural components (34) are secured to the main structure (18) of the cabin (4).

3. Aircraft cabin (4) according to either of claims 1 and 2, **characterised by** the fact that the raised aisle (32) is supported by the bridge (20) of the cabin.

4. Aircraft cabin (4) according to one of claims 1 to 3, **characterised by** the fact that a staircase (38) gives access to each of the ends of the raised aisle (32) .

5. Aircraft cabin (4) according to one of claims 1 to 4), **characterised by** the fact that the raised aisle (32) divides the cabin (4) longitudinally into two longitudinal sections.

6. Aircraft cabin (4) according to claim 5, **characterised by** the fact that the cabin (4) has seats (42) that can be converted into beds and seats (12) that cannot be converted into beds, and by the fact that the seats (42) convertible into beds are located in one and the same longitudinal section.

7. Aircraft cabin (4) according to one of claims 1 to 6, **characterised by** the fact that passageways for air conduits and ducts are provided in a structure (24) supporting the bridge (20).

8. Aircraft cabin (4) according to one of claims 1 to 8, **characterised by** the fact that stowage spaces are arranged under the raised aisle (32).

9. Aircraft cabin (4) according to one of claims 1 to 8, **characterised by** the fact that in the areas where the beds (14) are located above the seats (12, 42), the ceiling of the bridge is considerably parallel with the bridge (20).
